# EUROPEAN PATENT APPLICATION

(11) **EP 1 542 473 A1**
(43) Date of publication of application: **15.06.2005**
(21) Application number: 04257358.4
(22) Date of filing: 26.11.2004
(51) Int. Cl.: H04N 7/24

(54) **Broadcast data system and broadcast data receiver**

(30) Priority: 04.12.2003 GB 0328103
(71) Applicant: Pace Micro Technology PLC, Shipley, West Yorkshire BD18 3LF (GB)
(72) Inventor: Entwistle, Paul, Saltaire, Shipley BD18 3LF (GB)
(74) Representative: Wood, Graham

(57) **Abstract**

A broadcast data system is provided which includes at least one broadcast data receiver (BDR) capable of receiving one or more digital data streams from a remote source and decoding said data streams to provide video, audio and/or auxiliary data for display on a display screen and/or for listening to via speakers. The BDR is capable of undertaking one or more function or trick modes with respect to a selected data stream following a request from a user. The BDR is provided with profiling means for profiling at least a portion of the selected data stream to identify one or more pre-defined criteria therein following the user request and, on identification of a location of said pre-defined criteria, the profiling means estimates one or more further locations of said pre-defined criteria in the data stream. The estimate of the further locations is then signalled to the remote source.

## Description

This invention relates to a broadcast data system and a broadcast data receiver for use in said system.

Although the following description refers almost exclusively to a broadcast data system for use in a home network system, it will be appreciated by persons skilled in the art that the present invention could also apply to cross network systems, such as between a broadcaster head end and one or more BDRs located on a subscriber's premises.

The term broadcast data receiver (BDR) used in the following description, also referred to as a set top box, is a device which receives digital data from a broadcaster located at a remote location and processes and decodes said data to form video, audio and/or auxiliary data for display on a television display screen associated with or forming part of the BDR and /or for listening via speakers.

Broadcast data receivers are now being used in broadcast data systems to provide interactive television, wherein a user is able to undertake a plurality of functions in respect of a live incoming broadcast data stream, such as stop, pause, rewind and/or fast forward the video and/or audio data. These functions are often referred to as "trick modes". In addition, there are an increasing number of different forms of user selectable services which can be selected via the BDR. One such service is Video on Demand (VoD). In this service the BDR user can select to view a programme or film at that instant, or at a designated time in the future, such that the user does not have to be bound by any particular television or radio programme scheduling imposed by the broadcaster. As part of the VoD service, the user can also undertake trick modes associated therewith.

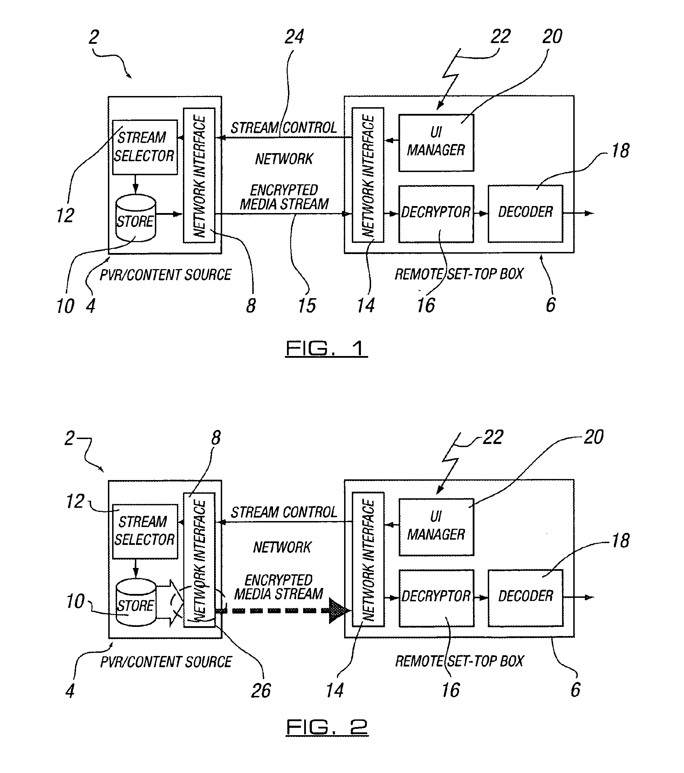

An example of a known home network system or broadcast data system 2 via which trick modes can be used is described below with reference to figure 1. The home network includes a master broadcast data receiver or personal video recorder (PVR) 4 located on a customer's premises for receiving video and/or audio data streams from a broadcaster. This master PVR 4 can communicate with at least one further PVR or BDR 6 located on the customers premises, thereby typically forming a master/slave arrangement. Thus, for example, a customer may have a plurality of televisions and BDRs in different rooms of their home.

The master PVR 4 has a network interface 8 for allowing receipt and transmission of data streams with the slave BDR 6, storage media 10 for storing data streams therein and a stream selector 12. The slave BDR 6 includes a network interface 14 which allows for receipt and transmission of data streams to and from the master PVR 4, a decryptor 16 for decrypting encrypted digital data 15 received from the master PVR and a decoder 18 for decoding said digital data to provide video and/or audio for display on a television screen connected thereto. User interface (UI) management means 20 are also provided in the BDR 6 for processing data received from the user via control means, such as a remote control device, shown by arrow 22.

Currently, if a user of a slave BDR 6 wishes to undertake a trick mode such as fast forward or rewind, the user presses the relevant button on the remote control to initiate a signal. This signal is processed by the UI manager 20 and transmitted to the master PVR 4 via network interfaces 8, 14, as shown by arrow 24. This allows a user to move through the stored data streams in storage media 10 of the master PVR 4 until the required point in the data stream is identified. With unencrypted data streams, it is possible for the user to move through a required data stream substantially up to the exact location of the required data, such as the start of groups of pictures (GOPs) or I Frames (Intra-coded data frames which contain all the information required to re-build a frame of video). The speed at which a trick mode can be undertaken is dependent on the available hard disk drive bandwidth of the master PVR 4 since the entire stored data stream needs to be "consumed" or processed to allow the user to find the required point or points in the video which they wish to watch. Thus, the stored data streams in storage media 10 are typically decrypted and the identified subset of data required by the user is then re-encrypted and transmitted to the slave BDR 6 over the home network.

As the provision of home networking and interactive television increases, there is an increasing requirement for broadcasters to maintain security of their broadcast network. As such, there is an increasing requirement for data to be decrypted at the slave BDR 6 rather than at the master PVR 4 of the home network. The forwarding of the entire encrypted data stream to the clients BDR 6 in this manner presents a network bandwidth problem due to network congestion at the master PVR 4, as shown in figure 2 by arrow 26. For example, a 30x fast forward trick mode require 30 times the average bandwidth to be made available across the home network (i.e. 3Mbps in normal mode to 90 Mbps during the trick mode).

It is therefore an object of the present invention to provide a broadcast data system which overcomes this problem.

According to a first aspect of the present invention there is provided a broadcast data system, said system including at least one broadcast data receiver (BDR) capable of receiving one or more digital data streams from a remote source and decoding said data streams to provide video, audio and/or auxiliary data for display on a display screen and/or for listening to via speakers, said BDR capable of undertaking one or more function or trick modes with respect to a selected data stream following a request from a user, characterised in that said BDR is provided with profiling means for profiling at least a portion of the selected data stream to identify one or more pre-defined criteria therein following the user request and, on identification of a location of said pre-defined criteria, said profiling means estimates one or more further locations of said pre-defined criteria in the data stream.

The advantage of the present invention is that by removing the requirement for segments of the data stream between the one or more estimated locations to be sent to the BDR, this removes the need for the entire selected data stream to be sent and decoded by the BDR. This significantly reduces the bandwidth used across the network. Thus, only an initial portion of the selected data stream needs to be decoded and thereafter only the estimated further or next locations of the segments of data in the data stream containing the pre-defined criteria needs to be sent to the BDR.

Preferably the estimate of the next or further locations is signalled from the BDR to the remote source. The remote source then only need send segments of data relating to the estimated locations and can cut out or remove portions of data between said required segments.

The remote source may be arranged to discontinue streaming of at least part of the selected data stream once it has received the estimate of locations of said pre-defined criteria from the BDR.

Examples of trick or function modes have already been described herein and typically include any user requested function relating to a selected data stream.

Preferably the incoming data stream is encrypted data and the BDR has decryption means for decrypting the same.

In one embodiment the BDR is capable of generating identification means for identifying portions of data to be removed from the data stream and/or for identifying segments of data relating to said pre-determined criteria in said data stream.

In one embodiment the broadcast data system is part of a home network system. The remote source can be a master BDR or PVR or the remote source can communication data to a slave BDR or PVR via a master BDR or PVR. Thus, in one example, a master PVR or BDR is provided in the home for receiving digital data from a broadcaster and one or more further slave BDRs are provided in the home which receive digital data from the master BDR/PVR.

Preferably the trick or function mode is requested by a user in respect of a slave BDR.

In a further embodiment the broadcast data system includes a master PVR/BDR located at the broadcaster head end and a client BDR located at a customer's premises.

In a yet further embodiment, an intermediary service provider receives broadcast data from the broadcaster and provides the master BDR/PVR functionality remotely from the home. In this case, the broadcast data stream content is securely broadcast via the intermediary service provider, and is decrypted by the slave BDR in the home. This invention then provides the benefits of limiting the need for excessive bandwidth over the network to the home, when trick or function modes are requested by the slave BDR user, whilst maintaining the integrity of the encryption scheme used by the originating broadcaster.

Preferably the estimated location or locations of said next pre-determined criteria include a "byte" location in the data stream which the BDR considers the pre-defined criteria is likely to be found. This location is preferably the next byte location in the data stream.

The pre-defined criteria can include any or any combination of GOP, I-frame, P-frame, IPB structure time stamps, bit rate information and/or the like.

Once the BDR has received an estimate of the next one or more locations, discontinuation of streaming of the current data stream to the BDR takes place.

In one example, if the trick mode is a rewind function of the BDR, since the BDR has already decoded and decrypted the data stream, storage means in the BDR can store the one or more locations of the pre-defined criteria therein, thereby allowing easy identification of said locations when a rewind request is submitted by a user. The storage means can also be used in respect of other trick or function modes.

Preferably the profiling of data is undertaken in respect of the video data stream but can also be undertaken in respect of the audio data stream if required.

Preferably the master PVR/BDR includes stream selector means for processing the user's request in relation to a particular data stream which the user has requested to undertake a trick mode thereon.

Further preferably the remote source and/or master PVR/BDR includes decimation means for removing segments of data which are located between the one or more estimated locations of the data stream.

According to a second aspect of the present invention there is provided a BDR for use in a broadcast data system.

According to a further aspect of the present invention there is provided a method of using a broadcast data system, said system including at least one broadcast data receiver (BDR) capable of receiving one or more digital data streams from a remote source and decoding said data streams to provide video, audio and/or auxiliary data for display on a display screen and/or for listening to via speakers, said method including a user submitting a request for a trick or function mode to the BDR in respect of a particular data stream received by said BDR from a remote source, said BDR profiling said data stream to estimate the location of one or more pre-defined criteria and, on identification of said estimated location, the data stream being sent to the BDR is moved to that estimated location and/or one or more segments of the data stream relating to that criteria are sent to the BDR.

Embodiments of the present invention will now be described with reference to the accompanying figures, wherein:
Figure 1 illustrates a conventional broadcast data system;
Figure 2 illustrates a problem associated with the conventional broadcast data system shown in figure 1;
Figure 3 illustrates a broadcast data system in accordance with the present invention; and
Figure 4 illustrates one example of the present invention.

The common features of figures 1-3 are illustrated using the same reference numerals.

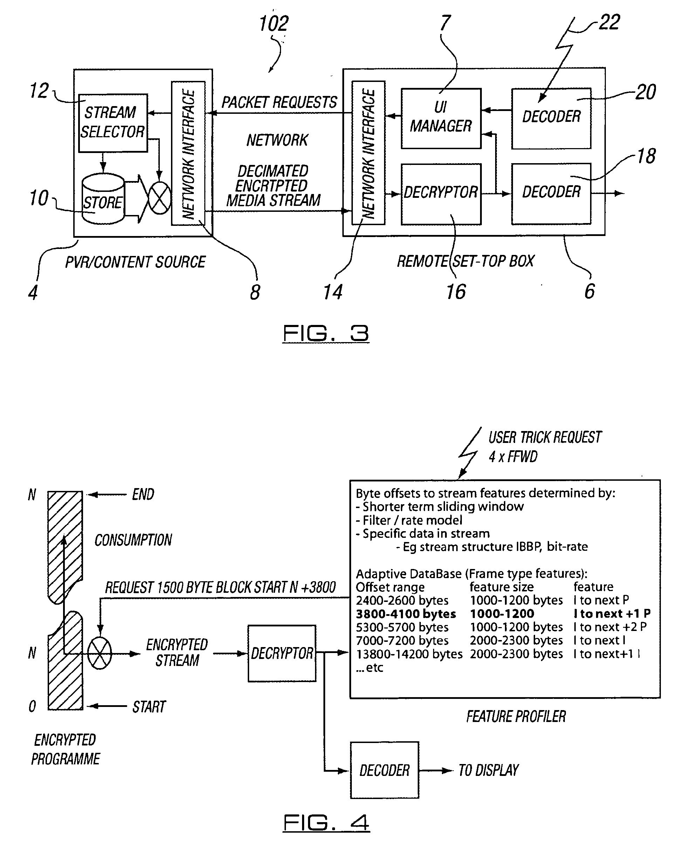

Referring to figure 3, there is illustrated a broadcast data system 102 including a master PVR/BDR 4 located at a first location in a user's home and at least other BDR 6 located in a different location in the user's home, hereinafter referred to as the slave BDR 6.

The master PVR 4 is provided with a network interface 8 for communicating with the network interface 14 of slave BDR 6. As such, the master PVR receives digital data from a broadcaster and this data can then be accessed by the slave BDR via the master PVR. The PVR 4 includes a stream selector 12 and storage media in the form of a hard disk drive 10 for storing data streams therein.

The slave BDR 6 includes a decryptor 16 for decrypting incoming encrypted data streams received from the master PVR 4, a decoder 18 for decoding digital data streams received from master PVR 4 and a UI manager 20. The slave BDR 6 communicates with the master PVR 4 in the conventional manner as described above.

In accordance with the present invention, when a trick mode is activated by a user at the slave BDR 6 in relation to a particular data stream, rather than the entire encrypted data stream being transmitted from the master PVR to the slave BDR, means are provided to allow pre-determined segments of data to be transmitted. This has the significant advantage of reducing the network bandwidth required to transmit encrypted data streams for operation of a trick mode.

More specifically, the slave BDR 6 is provided with profiling means to profile the incoming data stream received from the master PVR4. This profiling includes decrypting and/or rendering an initial portion of the data stream and monitoring the data stream for pre-determined criteria, such as GOP, I-frame, IPB structure time stamps, bit-rate information and/or the like. Based on this initial identified information, the slave BDR can then estimate the next "byte" location or locations for the pre-determined criteria. This estimate is then passed back to the master PVR 4 which then discards the interim data between the required "byte" locations which are not required. The master PVR 4 then discontinues streaming of the entire selected data stream and moves directly to the estimated "byte" location or locations and transmits the required portions or segments of data relating to these locations only to the slave BDR 6.

A range of "byte" locations can be estimated by the slave BDR 6 based on historical data of the typical size of these features. Figure 4 illustrates an example feature database, derived by the slave BDR. It illustrates estimates of byte location (ranges) for features such as; I frame to next I frame, I frame to next P frame, I frame to next+1 Pframe, and the estimated size of that feature. It further illustrates a users request for a 4x fast-forward being translated into a request for a "next+ 1 Pframe" offset from the current stream position "n". The feature profiler, which has extracted specific knowledge of the structure of the locally decrypted datastream, for example "IBBPBBP" frame sequence, has determined the next most appropriate feature to request for decryption, decoding and display, and where it is likely to be located within the stream. This is communicated across the network to the master BDR for actioning.

Once the master PVR 4 has received a "byte" location request from the slave BDR, the PVR discontinues streaming of the current data stream being transmitted to the slave BDR and sends the new segment of the data stream relating to the "byte" location request.

The profiling means (feature database/stream predictor 7) continuously and adaptively updates the feature estimates as further segments of the datastream are received, decrypted and analysed.

Storage media associated with the profiling means of the slave BDR typically can store a record of the byte locations of the one or more pre-determined criteria in a particular data stream once it has been decrypted. Thus, if the trick mode requested by a user of the slave BDR is a rewind function, the profiling means of the slave BDR can refer to this stored history of the byte locations in the data stream, thereby more accurately providing an estimate of the required byte locations in the data stream.

Thus, the present invention has the advantage that a user of a slave BDR can rapidly skip to a required segment or portion of a data stream, such as for example, if the user wishes to watch a television programme without viewing the adverts, without using large amounts of bandwidth in the home network.

The byte location estimated by the profiling means does not need to be accurately identified since a margin of error either side of the required byte location will only increase the bandwidth used in the home network by a small amount.

Variable bit rate coding is more problematic in that it reduces the prediction accuracy of the location of the one or more predefined criteria or "byte" location. In order to improve or overcome this problem, the profiling means can use bit rate information carried in the sequence header of the data stream. In addition, the accuracy of the required location can be improved by using PES layer packet size information if it is contained in the selected data stream. Further enhancements can be made using, for example, a short time window predictive model to estimate the most likely future bit-rate. The broadcasters' encoder, is likely to be bounded and rate-limited in its use of bit-rate. These characteristics can similarly be deduced by the profiler in the slave BDR and used to enhance the accuracy of the feature predictions.

## Claims

1. A broadcast data system, said system including at least one broadcast data receiver (BDR) capable of receiving one or more digital data streams from a remote source and decoding said data streams to provide video, audio and/or auxiliary data for display on a display screen and/or for listening to via speakers, said BDR capable of undertaking one or more function or trick modes with respect to a selected data stream following a request from a user, **characterised in that** said BDR is provided with profiling means for profiling at least a portion of the selected data stream to identify one or more pre-defined criteria therein following the user request and, on identification of a location of said pre-defined criteria, said profiling means estimates one or more further locations of said pre-defined criteria in the data stream.

2. A broadcast data system according to claim 1 **characterised in that** the estimate of said further locations is signalled to the remote source.

3. A broadcast data system according to claim 2 **characterised in that** only segments of the selected data stream relating to the locations of the pre-defined criteria are forwarded from the remote source to the BDR.

4. A broadcast data system according to claim 3 **characterised in that** decimation means are provided in the remote location for removing portions of data between the data segments that are not related to said pre-defined criteria.

5. A broadcast data system according to claim 1 **characterised in that** the remote source discontinues streaming of at least part of the selected data stream being sent to the BDR once the estimate of said one or more further locations of said pre-defined criteria have been received from the BDR.

6. A broadcast data system according to any preceding claim, **characterised in that** the BDR is capable of generating identification means for identifying portions of data to be removed from the data stream and/or for identifying segments of data relating to said pre-determined criteria in said data stream.

7. A broadcast data system according to claim 1 **characterised in that** the one or more pre-defined criteria includes any or any combination of GOP, I-frame, P-frame, IPB structure time stamps and/or bit rate information.

8. A broadcast data system according to claim 1 **characterised in that** the one or more further locations of the pre-defined criteria include one or more byte locations in the data stream in which the BDR considers the pre-defined criteria is likely to be found.

9. A broadcast data system according to claim 8 **characterised in that** the estimate of the one or more byte locations is based on historical data stored in the BDR relating to typical byte sizes of pre-defined criteria.

10. A broadcast data system according to claim 1 **characterised in that** the digital data stream includes encrypted data and the BDR has decryption means capable of decrypting the same.

11. A broadcast data system according to claim 1 **characterised in that** the one or more digital data streams are provided to the BDR from the remote source via a master BDR or a master personal video recorder (PVR) and/or the remote source is or includes a master BDR or master PVR.

12. A broadcast data system according to claim 10 **characterised in that** the master BDR includes decimation means for removing portions of data between the data segments that are not related to said pre-defined criteria.

13. A broadcast data system according to claim 10 **characterised in that** the master BDR/PVR provides encrypted data to a slave BDR for decryption via decryption means located in the slave BDR.

14. A broadcast data system according to claim 1 **characterised in that** the system includes an intermediary service provider which is capable of receiving data from the remote source and operating a master BDR/PVR.

15. A broadcast data system according to claim 14 **characterised in that** the master BDR in turn allows operation of a slave BDR.

16. A broadcast data system according to claim 1 **characterised in that** the trick or function modes includes any or any combination of stop, pause, rewind and/or fast forward of the video and/or audio data streams.

17. A broadcast data system according to claim 1 **characterised in that** the BDR is provided with storage means for storing the location or estimate of location relating to said pre-defined criteria.

18. A broadcast data system according to claim 1 **characterised in that** profiling of the data is undertaken in respect of the video data stream.

19. A broadcast data system according to claim 1 **characterised in that** the remote source and/or the BDR includes stream selection means for selecting a particular data stream from a plurality of data streams for which a user has requested to undertake a trick or function mode in respect of.

20. BDR for use in a broadcast data system according to claim 1.

21. A method of using a broadcast data system, said system including at least one broadcast data receiver (BDR) capable of receiving one or more digital data streams from a remote source and decoding said data streams to provide video, audio and/or auxiliary data for display on a display screen and/or for listening to via speakers, said method including a user submitting a request for a trick or function mode to the BDR in respect of a particular data stream received by said BDR from a remote source, said BDR profiling said data stream to estimate the location of one or more pre-defined criteria and, on identification of said estimated location, the data stream being sent to the BDR is moved to that estimated location and/or one or more segments of the data stream relating to that criteria are sent to the BDR.
